# EUROPEAN PATENT SPECIFICATION

(11) **EP 1 435 501 B1**
(45) Date of publication and mention of the grant of the patent: **22.02.2006**
(21) Application number: 02029076.3
(22) Date of filing: 30.12.2002
(51) Int. Cl.: F27D 5/00, C04B 41/50, C23C 4/10

(54) **Heat-resistant coated member**
Hitzebeständiges beschichtetes Element
Membre revêtu résistant à la chaleur

(43) Date of publication of application: 07.07.2004
(73) Proprietor: Shin-Etsu Chemical Co., Ltd., Chiyoda-ku, Tokyo (JP)
(72) Inventor: Takai, Yasushi, c/o Magnetic Materials Res. Center, Takefu-shi, Fukui-ken (JP); Hamaya, Noriaki, 2-1-5, Kitago, Takefu-shi, Fukui-ken (JP); Kaneyoshi, Masami, 2-1-5, Kitago, Takefu-shi, Fukui-ken (JP)
(74) Representative: TER MEER - STEINMEISTER & PARTNER GbR

(56) References cited:
- EP-A- 1 167 565
- EP-A- 1 239 055
- EP-A- 1 243 666
- WO-A-97/40203
- US-A- 5 662 737
- US-A1- 2002 177 014

## Description

### BACKGROUND OF THE INVENTION

### Field of the Invention

The present invention relates to a heat-resistant coated member for use when sintering or heat-treating metals or ceramics in a vacuum, an inert atmosphere or a reducing atmosphere.

### Prior Art

Powder metallurgy products are generally manufactured by mixing a binder phase-forming powder with the primary alloy, then kneading the mixture, followed by pressing, sintering and post-sintering treatment. The sintering step is carried out in a vacuum or an inert gas atmosphere, and at an elevated temperature of 1,000 to 1,600°C.

In a typical cemented carbide manufacturing process, a solid solution of tungsten carbide with cobalt or of titanium carbide or tantalum carbide is comminuted and mixed, then subjected to drying and granulation to produce a granulated powder. The powder is then pressed, following which such steps as dewaxing, pre-sintering, sintering and machining are carried out to give the final cemented carbide product.

Sintering is carried out at a temperature at or above the temperature at which the cemented carbide liquid phase appears. For example, the eutectic temperature for a ternary WC-Co system is 1,298°C. The sintering temperature is generally within a range of 1,350 to 1,550°C. In the sintering step, it is important to control the atmosphere so as to enable cemented carbide correctly containing the target amount of carbon to be stably sintered.

When cemented carbide is sintered at about 1,500°C, green specimens placed on a carbon tray often react with the tray. That is, a process known as cementation occurs, in which carbon from the tray impregnates the specimen, lowering the strength of the specimen. A number of attempts have been made to avoid this type of problem, either by choosing another type of tray material or by providing on the surface of the tray a barrier layer composed of a material that does not react with the green specimen. For example, ceramic powders such as zirconia, alumina and yttrium oxide are commonly used when sintering a cemented carbide material. One way of doing so is to scatter the ceramic powder over the tray and use it as a placing powder. Another way is to mix the ceramic powder with a solvent and spray-coat the mixture onto the tray or apply it thereto as a highly viscous slurry. Yet another way is to form a coat by using a thermal spraying or other suitable process to deposit a dense ceramic film onto the tray. These techniques are described in JP-A 2000-509102. Providing such an oxide layer as a barrier layer on the surface of the tray has sometimes helped to prevent reaction of the tray with the specimen.

However, reaction with the tray arises even with the formation of such a barrier layer. As a result, after use in one or two sintering operations, the barrier layer on the tray cracks and delaminates.

Delamination of the film allows the carbon tray to react more easily with the specimen. Moreover, given the risk that the film will delaminate, fragment into small pieces, and become incorporated into the green specimen during sintering, a new tray must be used each time sintering is carried out.

A need has thus been felt, particularly in regards to the use of such trays in sintering, for a way to prevent the specimen from reacting with the barrier layer and the barrier layer from reacting with the tray and delaminating. There exists in particular a desire for a tray material which has a long service life and which, regardless of how many times the tray is used in the sintering of powder metallurgy products, does not result in reaction of the specimen with the barrier layer or in separation of the barrier layer from the tray substrate.

WO 97/40203 A relates to a method of sintering of cemented carbide or cermet bodies lying on graphite trays, wherein the graphite trays are coated with a covering layer of Y₂O₃ containing ZrO₂ or corresponding volumetric amounts of other refractory oxides.

US 2002/177014 relates to rare earth-containing compound particles for thermal spraying, which may be coated on a substrate. As substrate materials Al, Fe, Si, Cr, Zn, Zr, Ni and alloys thereof are disclosed.

EP-A-1 239 055 relates to thermal spray spherical particles as well as sprayed components which particles may be coated on a substrate examples of which are Al. Ni. Cr. Zn, Zr, Si and alloys, oxides, nitrides and carbides thereof.

US-A-5,662,737 relates to a method for making rare earth metal oxide ceramic precursor compositions which may be used as a means of creating a thin film coating of rare earth metal oxide ceramic on surfaces made of alumina.

EP-A-1 243 666 relates to rare earth oxide particles for thermal spraying as well as a sprayed component having a coating of the rare earth oxide particles wherein the substrate may be Al, Fe. Si. Cr. Zn, Zr, Ni and alloys thereof.

EP-A-1 167 565 relates to a method for thermal spray coating and rare earth oxide powder used therefor which spray coating may be coated on aluminium, nickel, chromium, zinc and zirconium as well as alloys of these metals and ceramic materials such as alumina, zirconia, aluminium nitride, silicon nitride and silicon carbide as well as fused silica glass.

### SUMMARY OF THE INVENTION

It is therefore an object of the invention to provide a heat-resistant, corrosion-resistant, highly non-reactive, and inexpensive coated member for use when sintering or heat-treating metals or ceramics in a vacuum, an inert atmosphere or a reducing atmosphere.

We have discovered that heat-resistant coated members made of a substrate composed of a specific type of material and a layer which covers the substrate and is composed primarily of a rare earth-containing oxide as defined in claim 1 have excellent heat resistance, corrosion resistance and non-reactivity when used in the sintering or heat treatment of metals or ceramics in a vacuum, an inert atmosphere or a reducing atmosphere.

Accordingly, the invention provides a heat-resistant coated member in which a substrate composed of a material selected from among molybdenum, tantalum, tungsten, and carbon having a specific density is coated with a layer composed primarily of a rare earth-containing oxide, as defined in claim 1.

The rare earth-containing oxide is composed primarily of at least one element selected from among dysprosium, holmium, erbium, terbium, gadolinium, thulium, ytterbium, lutetium, europium and samarium, and preferably at least one element selected from among ytterbium, europium and samarium.

The layer composed primarily of a rare earth-containing oxide preferably includes ytterbium in an amount which accounts for at least 80 atom % of all the metal elements, including rare-earth elements, in the layer. Moreover, it is advantageous for the layer composed primarily of a rare earth-containing oxide to have a thickness of 0.02 to 0.4 mm and to be provided thereon with one or more layer of a compound of at least one element selected from among Group 3A to Group 8 elements in the short-form periodic table.

The substrate in the heat-resistant coated member of the invention may be made of carbon having a density of at least 1.5 g/cm³.

The heat-resistant coated member of the invention is typically used for sintering metals or ceramics in a vacuum, an inert atmosphere or a reducing atmosphere.

### DETAILED DESCRIPTION OF THE INVENTION

As noted above, the heat-resistant coated member of the invention is intended for use particularly when sintering or heat-treating, in a vacuum, inert atmosphere or reducing atmosphere, the metal or ceramic from which a product is to be formed. The type of coating oxide, the type of substrate and the combination thereof must be varied and optimized in accordance with the product itself and the temperature and type of gas used in sintering and heat treatment.

The heat-resistant coated member of the invention is particularly effective as crucibles for melting metal or as parts for fabricating and sintering various types of complex oxides. Examples of such parts include setters, saggers, trays and molds.

In the invention, the substrate for forming such heat-resistant, corrosion-resistant members used in the sintering or heat treatment of metals and ceramics is selected from among molybdenum, tantalum, tungsten, carbon.

When carbon is used as the substrate, the carbon substrate has a density of at least 1.5 g/cm³, and especially 1.6 to 1.9 g/cm³. Carbon has a true density of 2.26 g/cm³. At a substrate density of less than 1.5 g/cm³, although the low density provides the substrate with good resistance to thermal shock, the porosity is high, which makes the substrate more likely to adsorb atmospheric moisture and carbon dioxide and sometimes results in the release of adsorbed moisture and carbon dioxide in a vacuum. Moreover, to enhance formation of the film on the substrate, it is preferable for the oxide layer to have a thermal expansion coefficient of not more than 4 × 10⁻⁶ to 7 × 10⁻⁶.

When a transparent ceramic such as YAG is sintered, treatment within a temperature range of 1,500 to 1,800°C in a vacuum, an inert atmosphere or a weakly reducing atmosphere tends to give rise to reactions between the substrate material and the film oxide and to reactions between the film oxide and the product on account of the elevated temperature. It is therefore important to select a substrate and film oxide combination that discourages such reactions from arising. At temperatures above 1,500°C in particular, when carbon is used in the substrate, aluminum and rare-earth elements tend to form carbides in a vacuum or a reducing atmosphere. Under such conditions, it is desirable to use molybdenum, tantalum and tungsten as the substrate and to use a film-forming jig in which a rare-earth-containing oxide has been combined with the film oxide.

The heat-resistant coated member of the invention is made up of the above-described substrate and, coated thereon, a layer composed primarily of a rare earth-containing oxide as the film oxide, as defined in claim 1.

The rare earth-containing oxide used in the invention is an oxide composed of a rare-earth element selected from among dysprosium, holmium, erbium, terbium, thulium, ytterbium, gadolinium, lutetium, europium and samarium. The light rare-earth elements lanthanum, cerium, praseodymium and neodymium undergo transitions in their crystalline structures at around 1,500°C, hence, for high-temperature applications, coating is carried out with an oxide containing one or more rare-earth elements as mentioned above. The use of an oxide containing one or more from among ytterbium, samarium and europium is especially preferred. An oxide that contains ytterbium in an amount which accounts for at least 80 atom % of all the metal elements, including rare-earth elements, in the layer is particularly desirable for good adhesion between the film and the substrate.

Aside from rare earth-containing oxides, oxides of metals selected from Group 3A to Group 8 elements (excluding the above-rare-earth elements) in the short form periodic table may be included within the layer composed primarily of a rare earth-containing oxide in an amount of 0 to 20 wt %, and especially up to 10 wt %, based on single oxides of these other metals. Oxides of one or more metal selected from among aluminum, silicon, zinc, iron, titanium, manganese, vanadium and yttrium are preferred. These metals other than rare-earth elements may be formed into complex oxides with rare-earth elements. Alternatively, single oxides of these metals may be formed, then mixed with rare earth-containing oxides or the foregoing complex oxides.

The oxide used is preferably composed of oxide particles having an average size of 10 to 70 µm. The coated substrate of the invention is typically produced by plasma spraying or flame spraying the oxide onto the above-described substrate in an inert atmosphere such as argon. If necessary, the surface of the substrate may be prepared by a suitable technique such as blasting prior to such a thermal spraying operation.

The layer composed primarily of a rare earth-containing oxide which is coated onto the substrate may consist of only a single layer or may in fact consist of two or more layers. The total thickness of the layer or layers is preferably 0.02 to 0.4 mm, and most preferably 0.1 to 0.2 mm. At less than 0.02 mm, there is a possibility that the substrate and the material being sintered may react with repeated use of the coated member. On the other hand, at more than 0.4 mm, thermal shock within the coated oxide film may cause the oxide to delaminate, possibly resulting in contamination of the product.

In the present invention, the above-described coat composed primarily of a rare earth-containing oxide may have provided thereon one or more layer of a compound of at least one element selected from among Group 3A to Group 8 elements in the short-form periodic table. Exemplary compounds of this type include oxides and nitrides. A layer of a compound composed of a rare-earth element such as yttrium, or another element such as aluminum, titanium, zirconium or manganese is preferred. Compounds of rare-earth elements other than yttrium are preferably compounds other than oxides, and are most preferably nitrides.

It is desirable for such a layer or layers, referred to hereinafter as the "outer coat," to be applied to a collective thickness of 0.01 to 0.1 mm.

In the practice of the invention, the coating layer on the coated member (i.e., either the layer composed primarily of a rare earth-containing oxide or the outer coat if an outer coat has been formed thereon) is formed to a surface roughness Ra of at least 2 µm and, if necessary, subjected to surface preparation by a suitable technique such as polishing. A surface roughness of 2 to 30 µm, and especially 3 to 10 µm, is preferred for imparting good sinterability to the sintered body being fabricated. At a surface roughness of less than 2 µm, the coating layer is so flat that this may interfere with sintering shrinkage by the workpiece resting thereon.

The member produced in the foregoing manner may be used to effectively heat-treat or sinter the above-described metals and ceramics at a temperature of up to 1,800° C, and preferably 900 to 1,700°C, for 1 to 50 hours. The heat treatment or sintering atmosphere is preferably a vacuum or an inert or reducing atmosphere, so long as the oxygen partial pressure is not more than 0.01 MPa.

The coated member of the invention can be advantageously used as, for example, a part in the production of any metal or ceramic that may be obtained by sintering or heat treatment. Exemplary metals and ceramics include chromium alloys, molybdenum alloys, tungsten carbide, silicon carbide, silicon nitride, titanium boride, rare-earth-aluminum complex oxides, rare earth-transition metal alloys, titanium alloys, rare earth-containing oxides, and rare earth complex oxides. Use in the production of tungsten carbide, rare earth-containing oxides, rare earth-aluminum complex oxides, and rare earth-transition metal alloys is especially advantageous. More specifically, coated members according to the invention, such as parts, are particularly effective in the production of transparent ceramics such as YAG and cemented carbides such as tungsten carbide, the production of Sm-Co alloys, Nd-Fe-B alloys and Sm-Fe-N alloys used in sintered magnets, and the production of Tb-Dy-Fe alloys used in sintered magnetostrictive materials and Er-Ni alloys used in sintered regenerators.

Examples of suitable inert atmospheres include argon or nitrogen atmospheres. Examples of suitable reducing atmospheres include inert gas atmospheres in which a carbon heater is used, and inert gas atmospheres containing also several percent of hydrogen gas. An oxygen partial pressure of not more than 0.01 MPa ensures that the coated members are kept resistant to corrosion.

In addition to having a good heat resistance, the coated member of the invention also has a good corrosion resistance and non-reactivity, and can therefore be effectively used for sintering or heat-treating metals or ceramics in a vacuum, an inert atmosphere or a reducing atmosphere.

### EXAMPLES

The following examples, comparative examples and reference example are provided to illustrate the invention, and are not intended to limit the scope thereof.

### Examples 1 to 14, and Comparative Examples 1 and 2

Molybdenum, tantalum and carbon substrates having dimensions of 50 × 50 × 5 mm were furnished for the respective examples. The surface of the substrate was roughened by blasting, following which rare earth-containing oxide particles having the compositions and average particle sizes indicated in Table 1 were plasma-sprayed onto the surface in argon/hydrogen, thereby coating the substrate with a layer of rare earth-containing oxide to form a coated member.

The physical properties of the coated members were measured. The results are shown in Table 1. The compositions were measured using inductively coupled plasma spectroscopy (Seiko SPS-4000), and the average particle sizes were measured by a laser diffraction method (Nikkiso FRA). The physical properties of the plasma-sprayed films were also measured. Those results are given below in Table 2. The thickness of the plasma-sprayed film was determined from a cross-sectional image of the film taken with an optical microscope. The surface roughness Ra was measured with a surface roughness gauge (SE350OK; Kosaka Laboratory, Ltd.).

The coated member obtained in each example was placed in a carbon heater furnace, following which the temperature was ramped up to a given temperature at a rate of 500° C/h, held at that temperature for a given length of time, then lowered at a rate of 400° C/h. This heating and cooling cycle was carried out twice, after which the appearance of the coated member was examined. The results are given in Table 2.

**Table 1**

| | Composition (weight ratio) | Average particle size (µm) | Substrate material | Substrate density (g/cm³) |
|---|---|---|---|---|
| Example 1 | Er₂O₃ | 60 | Mo | 10 |
| Example 2 | Er₂O₃ | 50 | Ta | 16 |
| Example 3 | Er₂O₃ | 40 | C | 1.7 |
| Example 4 | Yb₂O₃ | 60 | Mo | 10 |
| Example 5 | Yb₂O₃ | 50 | Ta | 16 |
| Example 6 | Yb₂O₃ | 40 | C | 1.7 |
| Example 7 | Er₂O₃:Yb₂O₃=50:50 | 30 | Mo | 10 |
| Example 8 | Er₂O₃:Yb₂O₃=50:50 | 30 | Ta | 16 |
| Example 9 | Er₂O₃:Yb₂O₃=50:50 | 25 | C | 1.7 |
| Example 10 | Er₂O₃:Al₂O₃=88:12 | 60 | Mo | 10 |
| Example 11 | Er₂O₃:Al₂O₃=88:12 | 60 | Ta | 16 |
| Example 12 | Er₂O₃:Al₂O₃=88:12 | 60 | C | 1.7 |
| Example 13 | Yb₂O₃+Er₂O₃ | Yb₂O₃=40 Er₂O₃=40 | C | 1.7 |
| Example 14 | Yb₂O₃+Y₂O₃ | Yb₂O₃=40 Y₂O₃=60 | C | 1.7 |
| Comparative Example 1 | - | - | Mo | 10 |
| Comparative Example 2 | Y₂O₃ | 60 | C | 1.7 |

**Table 2**

| | Sprayed film thickness (mm) | Surface roughness Ra (µm) | Atmosphere | O₂ partial pressure (MPa) | Temp. (°C) | Holding time (h) | Appearance | Separation of substrate and coat |
|---|---|---|---|---|---|---|---|---|
| Example 1 | 0.20 | 10 | vacuum | 0.001 | 1250 | 4 | no change | no |
| Example 2 | 0.15 | 8 | Ar | 0.001 | 1250 | 4 | no change | no |
| Example 3 | 0.20 | 6 | N₂+H₂ | 0.001 | 1250 | 4 | no change | no |
| Example 4 | 0.20 | 10 | vacuum | 0.0001 | 1600 | 4 | no change | no |
| Example 5 | 0.15 | 8 | Ar | 0.0001 | 1600 | 4 | no change | no |
| Example 6 | 0.20 | 6 | N₂+H₂ | 0.0001 | 1600 | 4 | no change | no |
| Example 7 | 0.15 | 5 | vacuum | 0.01 | 1800 | 4 | no change | no |
| Example 8 | 0.15 5 | 5 | Ar | 0.01 | 1800 | 4 | no change | no |
| Example 9 | 0.15 | 4 | N₂+H₂ | 0.01 | 1800 | 4 | no change | no |
| Example 10 | 0.15 | 11 | vacuum | 0.0001 | 1250 | 4 | no change | no |
| Example 11 | 0.15 | 10 | Ar | 0.0001 | 1250 | 4 | no change | no |
| Example 12 | 0.15 | 12 | N₂+H₂ | 0.0001 | 1250 | 4 | no change | no |
| Example 13 | 0.20 | 6 | N₂+H₂ | 0.0001 | 1600 | 4 | no change | no |
| Example 14 | 0.20 | 10 | N₂+H₂ | 0.0001 | 1600 | 4 | no change | no |
| Comparative Example 1 | - | 10 | vacuum | 0.001 | 1250 | 4 | deformation | - |
| Comparative Example 2 | 0.35 | 10 | N₂+H₂ | 0.001 | 1600 | 4 | cracks | yes |

The parts produced in Examples 1 to 14 according to the invention showed no change after heat treatment in a carbon heater furnace relative to before treatment. By contrast, following heat treatment in a carbon heater furnace, the parts produced in Comparative Examples 1 and 2 underwent surface cracking or oxide delamination, leading to corrosion.

### Reference Example

First, 0.84 g of carbon powder having a specific surface area of 200 m²/g and 0.01 mole of rare earth-containing oxide powders (average particle size, 1 to 2 µm) composed of the respective starting materials shown in Table 3 were thoroughly ground and mixed together with a small amount of ethanol in a mortar, then dried in a vacuum desiccator, giving mixed powders. Each of the mixed powders was pressed in a mold, forming 20 mm diameter pellets. The pellets were fired in an argon atmosphere at 1,420°C for 2 hours, after which the fired pellets were quickly crushed into a coarse powder and 1.5 g of the respective specimens were collected in stopperable specimen bottles. Next, 0.1 cm³ of deionized water was added to each bottle, and the bottles were stoppered. The stoppered bottles were left at rest for a while until the contents reached equilibrium, following which the gases within each bottles was subjected to gas chromatographic analysis to determine the amount of acetylene therein. The results are shown in Table 3 below.

**Table 3**

| | Amount of acetylene generated (mm³) |
|---|---|
| Y₂O₃ | 1.94 |
| Er₂O₃ | 1.07 |
| Yb₂O₃ | 0.06 |

The oxides of rare-earth elements having a relatively high atomic number such as erbium and ytterbium exhibit a lower level of acetylene formation than the metal oxides of rare-earth elements having a relatively low atomic number such as yttrium. In other words, little hydrolyzable carbide forms. What this means is that, when a carbon substrate is covered with a rare earth-containing oxide layer, carbide is less likely to form at the interface in the course of the heating/cooling/atmospheric release cycle, thus making it less likely that the bonding strength of the film to the substrate will be diminished by carbide hydrolysis. One reason for the difference in behavior between rare-earth elements is the ion radius. Carbide formation, carbide hydrolysis, or both are thought to be less likely to occur at a smaller ionic radius.

Moreover, acetylene generation is believed to be particularly low in the case of Yb₂O₃ because, in addition to its small ionic radius, ytterbium, unlike most rare-earth elements, assumes an oxidation number 2 state with relative ease. To establish whether this is indeed the case, a coated member fabricated in the same way as in Example 6 was high-frequency induction heated in a high vacuum until a temperature of at least 1,500°C was observed with a optical pyrometer. A trace amount of YbO was found to be present in the desorbed gases.

### Example 13

As in Example 6, a carbon substrate was prepared, then plasma-sprayed with Yb₂O₃ particles having an average size of 40 µm in argon/hydrogen to form a 0.1 mm coat. Er₂O₃, particles having an average size of 40 µm were subsequently plasma sprayed within the same atmosphere to form a 0.2 mm coated member.

### Example 14

Aside from using Y₂O₃ having an average particle size of 60 µm instead of Er₂O₃, the same procedure was carried out as in Example 13, giving a 0.2 mm coated member.

## Claims

1. A heat-resistant coated member in which a substrate composed of a material selected from the group consisting of molybdenum, tantalum, tungsten, and carbon having a density of at least 1.5 g/cm³ is coated with a layer composed of a rare earth-containing oxide, which layer may include O-20 wt% oxides of metals selected from Group 3A to Group 8 elements, excluding the rare earth elements, in the short form periodic table, based on single oxides of these other metals, wherein the rare earth-containing oxide is composed of at least one element selected from the group consisting of dysprosium, holmium, erbium, terbium, gadolinium, thulium, ytterbium, lutetium, europium and samarium.

2. The heat-resistant coated member of claim 1, wherein the rare earth-containing oxide is composed of at least one element selected from among ytterbium, europium and samarium.

3. The heat-resistant coated member of claim 1, wherein the layer composed of a rare earth-containing oxide is a rare earth-containing oxide layer containing ytterbium in an amount which accounts for at least 80 atom % of all the metal elements including rare-earth elements.

4. The heat-resistant coated member of claim 1, wherein the layer composed of a rare earth-containing oxide has a thickness of from 0.02 to 0.4 mm.

5. The heat-resistant coated member of claim 1, wherein the layer composed of a rare earth-containing oxide is provided thereon with one or more layer of a compound of at least one element selected from among Group 3A to Group 8 elements in the short-form periodic table.

6. Use of the heat-resistant coated member of claim 1 for sintering metals or ceramics in a vacuum, an inert atmosphere or a reducing atmosphere.

7. The heat-resitant coated member of claim 1, wherein the layer coated on the substrate is obtained by a flame spraying operation or by a plasma spraying operation.

## Patentansprüche

1. Wärmebeständiges beschichtetes Bauteil, in dem ein Substrat, aufgebaut aus einem Material, ausgewählt aus der Gruppe, bestehend aus Molybdän, Tantal, Wolfram und Kohlenstoff mit einer Dichte von mindestens 1,5 g/cm³, mit einer Schicht, aufgebaut aus einem Seltenerd-enthaltenden Oxid, beschichtet ist, worin die Schicht 0 bis 20 Gew.-% Oxide von Metallen, ausgewählt aus den Elementen der Gruppe 3A bis Gruppe 8, ausschließlich der Seltenerd-Elemente, in der Kurzform des Periodensystems, auf der Basis der einzelnen Oxide dieser anderen Metalle, enthalten kann, worin das Seltenerd-enthaltende Oxid mindestens aus einem Element, ausgewählt aus der Gruppe, bestehend aus Dysprosium. Holmium. Erbium. Terbium. Gadolinium, Thulium, Ytterbium, Lutetium, Europium und Samarium, besteht.

2. Wärmebeständiges beschichtetes Bauteil nach Anspruch 1, worin das Seltenerd-enthaltende Oxid aus mindestens einem Element, ausgewählt aus Ytterbium, Europium und Samarium, besteht.

3. Wärmebeständiges beschichtetes Bauteil nach Anspruch 1, worin die aus einem Seltenerd-enthaltenden Oxid aufgebaute Schicht eine Seltenerd-enthaltende Oxidschicht, enthaltend Ytterbium in einer Menge, welche mindestens 80 Atom-% aller Metallelemente einschließlich der Seltenerd-Elemente ausmacht, darstellt.

4. Wärmebeständiges beschichtetes Bauteil nach Anspruch 1, worin die aus einem Seltenerd-enthaltenden Oxid aufgebaute Schicht eine Dicke von 0.02 bis 0.4 mm aufweist.

5. Wärmebeständiges beschichtetes Bauteil nach Anspruch 1, worin die aus einem Seltenerd-enthaltenden Oxid aufgebaute Schicht darauf mit ein oder mehreren Schichten einer Verbindung aus mindestens einem Element, ausgewählt aus den Elementen der Gruppe 3A bis Gruppe 8 in der Kurzform des Periodensystems, versehen ist.

6. Verwendung des wärmebeständigen beschichteten Bauteils nach Anspruch 1 zum Sintern von Metallen oder Keramiken in einem Vakuum, einer inerten Atmosphäre oder einer reduzierenden Atmosphäre.

7. Wärmebeständiges beschichtetes Bauteil nach Anspruch 1, worin die auf dem Substrat beschichtete Schicht durch Flammbespritzen oder durch Plasmabesprühen erhalten wird.

## Revendications

1. Elément revêtu résistant à la chaleur dans lequel un substrat composé d'un matériau choisi dans le groupe consistant en molybdène, tantale, tungstène et carbone possédant une densité d'au moins 1,5 g/cm³ est revêtu d'une couche composée d'un oxyde contenant une terre rare, laquelle couche peut comprendre de 0 à 20% en poids d'oxydes de métaux choisis parmi des éléments du Groupe 3A au Groupe 8, à l'exclusion des éléments de terre rare, dans le tableau périodique simplifié, basé sur les oxydes simples de ces autres métaux, dans laquelle l'oxyde contenant une terre rare est composé d'au moins un élément choisi dans le groupe consistant en dysprosium, holmium, erbium, terbium, gadolinium, thulium, ytterbium, lutétium, europium et samarium.

2. Elément revêtu résistant à la chaleur selon la revendication 1, dans lequel l'oxyde contenant une terre rare est composé d'au moins un élément choisi parmi ytterbium, europium et samarium.

3. Elément revêtu résistant à la chaleur selon la revendication 1, dans lequel la couche composée d'un oxyde contenant une terre rare est une couche d'oxyde contenant une terre rare contenant de l'ytterbium en une quantité qui représente au moins 80% en atome de tous les éléments métalliques y compris les éléments de terre rare.

4. Elément revêtu résistant à la chaleur selon la revendication 1, dans lequel la couche composée d'un oxyde contenant une terre rare possède une épaisseur comprise entre 0,02 et 0,4 mm.

5. Elément revêtu résistant à la chaleur selon la revendication 1, dans lequel la couche composée d'un oxyde contenant une terre rare est fournie sur celui-ci avec une ou plusieurs couches d'un composé d'au moins un élément choisi parmi des éléments du Groupe 3A au Groupe 8 du tableau périodique simplifié.

6. Utilisation d'un élément revêtu résistant à la chaleur selon la revendication 1 pour agglomérer des métaux ou des céramiques sous vide, dans une atmosphère inerte ou une atmosphère réductrice.

7. Elément revêtu résistant à la chaleur selon la revendication 1, dans lequel la couche revêtue sur le substrat est obtenue selon une opération de projection à la flamme ou selon une opération de pulvérisation par plasma.
